(19) Europäisches Patentamt / European Patent Office / Office européen des brevets

(11) **EP 2 469 906 B1**

(12) **EUROPEAN PATENT SPECIFICATION**

(45) Date of publication and mention of the grant of the patent:
**15.08.2018 Bulletin 2018/33**

(21) Application number: **10788650.9**

(22) Date of filing: **25.03.2010**

(51) Int Cl.:
*H04W 48/12* (2009.01)  *H04L 5/00* (2006.01)

(86) International application number:
**PCT/CN2010/071302**

(87) International publication number:
**WO 2010/145254 (23.12.2010 Gazette 2010/51)**

(54) **METHOD AND SYSTEM FOR PROCESSING PILOT DEMODULATION, BASE STATION, USER EQUIPMENT THEREOF**

VERFAHREN UND SYSTEM ZUR VERARBEITUNG EINER PILOTSIGNALDEMODULATION, BASISSTATION UND BENUTZERGERÄT

PROCÉDÉ ET SYSTÈME DE TRAITEMENT DE DÉMODULATION AVEC PILOTE, STATION DE BASE ET ÉQUIPEMENT D UTILISATEUR ASSOCIÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.09.2009 CN 200910093462**

(43) Date of publication of application:
**27.06.2012 Bulletin 2012/26**

(73) Proprietor: **ZTE Corporation
Shenzhen, Guangdong 518057 (CN)**

(72) Inventors:
• **LIU, Wenhao
Shenzhen
Guangdong 518057 (CN)**
• **WANG, Yanwen
Shenzhen
Guangdong 518057 (CN)**
• **JIANG, Jing
Shenzhen
Guangdong 518057 (CN)**
• **ZHANG, Qinghong
Shenzhen
Guangdong 518057 (CN)**

(74) Representative: **Lemcke, Brommer & Partner
Patentanwälte Partnerschaft mbB
Siegfried-Kühn-Straße 4
76135 Karlsruhe (DE)**

(56) References cited:

WO-A1-2008/096626    CN-A- 1 988 408
CN-A- 101 299 634    CN-A- 101 431 490

• HUAWEI: "Common RS for DL high-order MIMO", 3GPP DRAFT; R1-090826 COMMON RS FOR DL HIGH-ORDER MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318681, [retrieved on 2009-02-03]
• 3GPP DRAFT; RT-090050REVMARKS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 1 September 2009 (2009-09-01), XP050812318, Retrieved from the Internet: URL:http://www.3gpp.org/ftp/tsg_ran/AHG1_I TU_Coord/TSGRT_08/Docs/ [retrieved on 2009-09-01]
• ERICSSON: "Update of uplink reference-signal hopping, downlink reference signals, scrambling sequences, DwPTS/UpPTS lengths for TDD and control channel processing", 3GPP DRAFT; 36211_CR0003R1_(REL-8)_R1-081161, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080520, 20 May 2008 (2008-05-20), XP050109130, [retrieved on 2008-05-20]

## Description

## Technical field

The present disclosure relates to the field of communications, particularly to a method and system of processing a reference signal for demodulation, a base station and a user equipment.

## Background

At present, demodulation of broadcast information and control information in a Long Term Evolution (LTE) system is achieved by a cell-specific reference signal. In order to guarantee reliable transmission of control information, the LTE system can transmit control data in the manner of Space-Frequency Block Code (SFBC) or in the manner of SFBC combined with Frequency Switched Transmit Diversity (SFBC +FSTD).

During transmission of service data, a service channel can transmit the service data in the manner of transmit diversity, spatial multiplexing or Beam Forming (BF). If the spatial multiplexing or transmit diversity is applied by the service channel, a User Equipment (UE) needs to use a cell-specific reference signal of a cell to demodulate the service data. If the service channel applies the manner of BF, the UE can utilize an existing UE-specific reference signal to demodulate the service data.

In practical applications, with the increase of transmitting antennas, the overheard of reference signals is correspondingly increased. Taking a 4-antenna reference signal pattern in the LTE system as an example, the proportion of the overhead of reference signals in every Resource Block (RB) is 14.29%. If reference signals of 8 antennas are extended in this way, the overhead of the reference signals will be increased and the resources applied to data transmission will be correspondingly reduced, thus influencing the data transmission efficiency of the whole system. Increasing the number of UE-specific reference signals to realize reference signal transmission will also result in extra overhead of reference signals. Taking a 4-antenna port as an example, the overhead of reference signals may account for as much as 21.43% of a total overhead. In addition, in the case that the service channel transmits service data in the manner of the spatial multiplexing, there is no change in the overhead of reference signals when the channel does not have sufficient separability. Therefore, such reference signal design bound with the number of antennas cannot take a specific spatial channel into consideration, which is bad in flexibility and increases the overhead of reference signals, thereby reducing the transmission efficiency.

Currently, there is no effective solution for solving the problem of low data transmission efficiency caused by large transmission overhead of reference signals in relevant technologies.

Document WO 2008/096626 A1 provides a mobile communication system employing OFDM for download.

Document HUAWEI: "Common RS for DL high-order MIMO", 3GPP DRAFT; R1-090826 COMMON RS FOR DL HIGH-ORDER MIMO, 3GPP, MOBILE COMPETENCE CENTRE; 650, RUTE DES LUCIOLES; F-06921 SOPHIA-ANTIPOLIES CEDEX; FRANCE, no. Athens, Greece; 3 February 2009, XP050318681 concerns common RS for DL high-order MIMO.

Document 3GPP DRAFT; RT-090050REVMARKS, 3GPP, MOBILE COMPETENCE CENTRE; 650, ROUTE DES LUCIOLES, F-06921 SOPHIA-ANTIPOLIS CEDEX; FRANCE, 1 September 2009, discloses discloses channel tracking capabilities to accommodate rapidly changing delay spread profile.

## Summary

The scope of the invention is defined by the accompanying independent claims. Preferred embodiments are defined by the dependent claims.

In order to solve the problem of low data transmission efficiency caused by large transmission overhead of reference signals in relevant technologies, the present disclosure provides a method of configuring a reference signal for demodulation, which can reduce the overhead of reference signals.

In order to solve the problem of low data transmission efficiency caused by large transmission overhead of reference signals in relevant technologies, the present disclosure further provides a method of demodulating using a reference signal for demodulation, which can reduce the overhead of reference signals.

In order to solve the problem of low data transmission efficiency caused by large transmission overhead of reference signals in relevant technologies, the present disclosure further provides a base station, which can reduce the overhead of reference signals.

In order to solve the problem of low data transmission efficiency caused by large transmission overhead of reference signals in relevant technologies, the present disclosure further provides a UE, which can reduce the overhead of reference signals.

In order to solve the problem of low data transmission efficiency caused by large transmission overhead of reference signals in relevant technologies, the present disclosure further provides a method of processing a reference signal for demodulation, which can reduce the overhead of reference signals.

In order to solve the problem of low data transmission efficiency caused by large transmission overhead of reference signals in relevant technologies, the present disclosure further provides a system of processing a reference signal for demodulation, which can reduce the overhead of reference signals.

The technical solutions of the present disclosure are realized as follows.

The present disclosure provides a method of configuring a reference signal for demodulation, including:

configuring, by a base station, cell-specific reference signals on control symbols and UE-specific reference signals on service symbols;

wherein the control symbols are Orthogonal Frequency Division Multiplexing (OFDM) symbols carrying control information, and the service symbols are OFDM symbols without carrying control information.

The method may further include: making, by the base station, a control channel for transmitting the control information carried on the control symbols.

Furthermore, an interval between neighboring UE-specific reference signals on a same sub-carrier may be N OFDM symbols, wherein N is 4, 5, 6 or 7;

a minimal interval between UE-specific reference signals on a same OFDM symbol or different OFDM symbols may be M sub-carriers, wherein M=3 or 4.

The method may further include: making, by the base station, a broadcast channel for transmitting broadcasting information and a service channel for transmitting service data carried on the service symbols.

The method may further include: when the UE-specific reference signals are configured on the service symbols, configuring a number of layers of the UE-specific reference signals as same as a number of channel layers for transmitting the service data in the service channel to obtain layered UE-specific reference signals, and using the layered UE-specific reference signals to demodulate the service data and the broadcast information.

The method may further include: configuring by the base station a channel identifier for the broadcast channel, wherein the channel identifier can be scrambled by the base station.

Further, the channel identifier may be a radio network temporary identifier.

The present disclosure further provides a method of demodulating using a reference signal for demodulation, including:

demodulating, by a UE, control information by using cell-specific reference signals configured on control symbols, and demodulating service data and broadcast data by using UE-specific reference signals configured on service symbols;

wherein the control symbols are OFDM symbols carrying control information and the service symbols are OFDM symbols without carrying control information.

The method may further include: using, by the UE, a channel identifier of a broadcast channel to descramble broadcast information carried on the service symbols to receive the broadcast information.

The present disclosure further provides a method of processing a reference signal for demodulation, including:

configuring, by a base station, cell-specific reference signals on control symbols and UE-specific reference signals on service symbols;

demodulating, by a UE, control information by using the cell-specific reference signals and demodulating service data and broadcast data by using the UE-specific reference signals;

wherein the control symbols are OFDM symbols carrying control information and the service symbols are OFDM symbols without carrying control information.

The present disclosure further provides a base station, including:

a first configuration module for configuring cell-specific reference signals on control symbols;

a second configuration module for configuring UE-specific reference signals on service symbols, and making a broadcast channel and a service channel carried on the service symbols, wherein the broadcast channel is configured to transmit broadcast information and the service channel is configured to transmit service data;

wherein the control symbols are OFDM symbols carrying control information and the service symbols are OFDM symbols without carrying control information.

Further, an interval between neighboring UE-specific reference signals on a same sub-carrier may be N OFDM symbols, wherein N= 4,5, 6 or 7;
a minimal interval between UE-specific reference signals on a same OFDM symbol or different OFDM symbols may be M sub-carriers, wherein M=3 or 4.

The present disclosure further provides a UE, including:

a first processing module for demodulating control information by using cell-specific reference signals configured on control symbols;
a second processing module for demodulating service data and broadcast information by using UE-specific reference signals configured on service symbols;
wherein the control symbols are OFDM symbols carrying control information and the service symbols are OFDM symbols without carrying control information.

The present disclosure further provides a system of processing a reference signal for demodulation, including a base station and a UE, wherein
the base station is configured to configure cell-specific reference signals on control symbols and UE-specific reference signals on service symbols, and the base station includes:

a first configuration module for configuring the cell-specific reference signals on the control symbols;
a second configuration module for configuring the UE-specific reference signals on the service symbols, and making a broadcast channel and a service channel carried on the service symbols;

the UE configured to demodulate control information by using the cell-specific reference signals, and to demodulate service data and broadcast data by using the UE-specific reference signals, and the UE includes:

a first processing module for demodulating the control information by using the cell-specific reference signals configured on the control symbols;
a second processing module for demodulating the service data and broadcast information by using the UE-specific reference signals configured on the service symbols;

wherein the control symbols are OFDM symbols carrying control information and the service symbols are OFDM symbols without carrying control information.

With at least one aforementioned technical solution of the present disclosure, the objective of reducing the overhead of reference signals can be achieved by respectively designing the reference signals on the service symbols and that on the control symbols. In addition, the reference signals on the broadcast channel and the reference signals on the service channel are designed uniformly, so that the design of the reference signals on the service symbols is simplified, and the overhead of reference signals is reduced while the transmit diversity performance is not evidently reduced for the virtual antenna mapping technology.

**Brief description of the drawings**

Fig. 1 shows a flowchart of a method of configuring a reference signal for demodulation according to an embodiment of the present disclosure;
Fig. 2 shows a flowchart of a method of demodulating a reference signal for demodulation according to an embodiment of the present disclosure;
Fig. 3 shows a transmit diversity scheme using virtual antenna port mapping according to an embodiment of the present disclosure;
Fig. 4a shows a schematic diagram of a reference signal mapping pattern of antenna port 0 according to example 1 of the present disclosure;
Fig. 4b shows a schematic diagram of a reference signal mapping pattern of antenna port 1 according to example 1 of the present disclosure;
Fig. 5 shows a schematic diagram of time-frequency resources occupied by broadcast information according to an embodiment of the present disclosure;
Fig. 6a shows a schematic diagram of a reference signal mapping pattern of antenna port 0 according to example 2 of the present disclosure;
Fig. 6b shows a schematic diagram of a reference signal mapping pattern of antenna port 1 according to example 2 of the present disclosure;

Fig. 7a shows a schematic diagram of a reference signal mapping pattern of antenna port 0 according to example 3 of the present disclosure;

Fig. 7b shows a schematic diagram of a reference signal mapping pattern of antenna port 1 according to example 3 of the present disclosure;

Fig. 8a shows a schematic diagram of a reference signal mapping pattern of antenna port 0 according to example 4 of the present disclosure;

Fig. 8b shows a schematic diagram of a reference signal mapping pattern of antenna port 1 according to example 4 of the present disclosure;

Fig. 9a shows a schematic diagram of a reference signal mapping pattern of antenna port 0 according to example 5 of the present disclosure;

Fig. 9b shows a schematic diagram of a reference signal mapping pattern of antenna port 1 according to example 5 of the present disclosure;

Fig. 9c shows a schematic diagram of a reference signal mapping pattern of antenna port 2 according to example 5 of the present disclosure;

Fig. 9d shows a schematic diagram of a reference signal mapping pattern of antenna port 3 according to example 5 of the present disclosure;

Fig. 10 shows a structure block diagram of a base station according to an embodiment of the present disclosure;

Fig. 11 shows a structure block diagram of a user equipment according to an embodiment of the present disclosure; and

Fig. 12 shows a structure block diagram of a system of processing a reference signal for demodulation according to an embodiment of the present disclosure.

## Detailed description

A method of processing a reference signal for demodulation of the present disclosure is: taking OFDM symbols carrying control information as control symbols, wherein the number of the OFDM symbols is notified by a Physical Control Format Indicator Channel (PCFICH); taking the remaining OFDM symbols (i.e. the OFDM symbols without carrying control information) as service symbols; configuring cell-specific reference signals on the control symbols and configuring UE-specific reference signals on the service symbols to effectively reduce the overhead of the reference signals and correspondingly increase the data transmission efficiency of the system. A processing procedure of the present disclosure is described hereinafter from two aspects, i.e. reference signal configuration and reference signal demodulation.

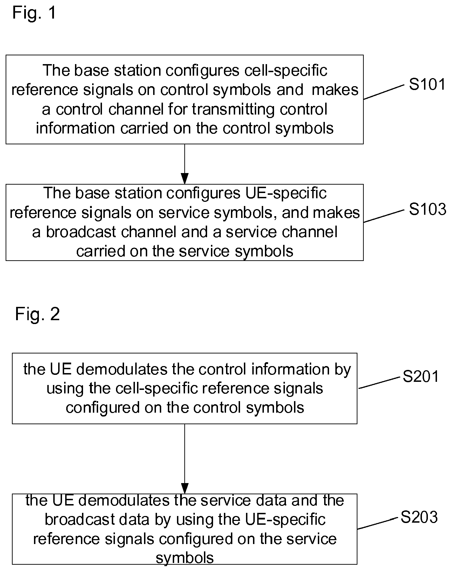

Fig. 1 shows a flowchart of a method of configuring a reference signal for demodulation according to an embodiment of the present disclosure. This flow is performed on a base station side. As shown in Fig. 1, the method of configuring a reference signal for demodulation of the present disclosure comprises:

step S101: the base station configures cell-specific reference signals on control symbols and makes a control channel for transmitting control information carried on the control symbols;

during a specific implementation process, the base station may place control information on some OFDM symbols and the number of the OFDM symbols carrying control information may be varied according to actual need, in this way, the OFDM symbols carrying control information, i.e. the control symbols, can be determined, and cell-specific reference signals are configured on the control symbols, wherein the pattern of the cell-specific reference signals can apply the patterns of existing cell-specific reference signals at antenna ports;

step S103: the base station configures UE-specific reference signals on service symbols, and makes a broadcast channel and a service channel carried on the service symbols;

wherein the broadcast channel is used for transmitting broadcast information and the service channel is used for transmitting service data; when configuring UE-specific reference signals on the service symbols, the following configuration rules may be applied: an interval between neighboring UE-specific reference signals on the same sub-carrier is N OFDM symbols, wherein N =4, 5, 6 or 7; the minimal interval between UE-specific reference signals on the same or different OFDM symbols is M sub-carriers, wherein M=3 or 4. Here only relative locations of all UE-specific reference signals are specified. Every specific downlink-dedicated location can be flexibly configured according to the need, as long as the relative locations of all UE-specific reference signals satisfy the aforementioned rules.

The broadcast channel can be configured with a channel identifier. For example, a Radio Network Temporary Identifier (RNTI) can be used as an identifier of the broadcast channel. The channel identifier is sent to the base station and the user so that the base station can perform scrambling on the channel identifier.

In actual applications, transmission methods of the broadcast channel, the control channel and the service channel can be different to a certain extent. Specifically, the broadcast channel and the control channel are transmitted in the manner of transmit diversity and the service channel is sent in the manner of transmit diversity or spatial multiplexing. The broadcast channel and the service channel should be transmitted on the service symbols. Preferably, in the present disclosure, the base station configures layered UE-specific reference signals on the service symbols: the number of layers of the UE-specific reference signals can be equal to the number of channel layers for transmitting service data in the service channel, that is, the service data can be transmitted in the manner of spatial multiplexing or transmit diversity. In addition, the reference signal design for spatial multiplexing is related to the number of separable layers of the spatial channel. In the case that the transmit diversity is applied, the service data can be transmitted in the manner of virtual antenna mapping, and control information can be transmitted in the manner of transmit diversity, moreover, the reference signal is related to an antenna port (or a virtual antenna port).

By the aforementioned reference signal configuration scheme, the overhead of reference signals is reduced to a certain extent. More specifically, the comparison of overhead of reference signals of 4 transmitting antennas between traditional LTE and the present disclosure is as shown in Table 1 (control data are transmitted by two antenna ports):

Table 1

| Transmission manner | The number of transmission layers | Overhead of reference signals | |
|---|---|---|---|
| | | Traditional LTE | The present disclosure |
| Transmit diversity | 1 | 24/168 | 20/168+0.01 |
| Spatial multiplexing | 4 | 24/168 | 20/168+0.01 |
| Spatial multiplexing | 2 | 24/168 | 20/168+0.01 |
| Spatial multiplexing | 1 | 24/168 | 20/168+0.01 |
| BF | 1 | 36/128 | 20/168+0.01 |
| BF | 2 | Not support | 20/168+0.01 |

In Table 1, the "0.01" in an improved overhead of reference signals of the present disclosure is an overhead reserved for measuring a reference signal (actual overhead is smaller than 0.01). In addition, as shown in Table 1, the overhead of reference signals is determined according to the number of separable layers so that the BF of multiple streams can be supported to overcome the shortage of the LTE that it only supports the BF of a single stream, thus avoiding the problem that the fixed reference signal pattern in relevant technologies is only related to the number of antennas which influences the flexibility of reference signal configuration.

It can be seen that the present disclosure respectively designs reference signals on service symbols and on control symbols to make overhead of reference signals reduced. Further, the design of reference signals on the service symbols can be simplified by uniformly designing reference signals of the broadcast channel and the service channel. By applying the method of configuring a reference signal for demodulation of the present disclosure, control information is demodulated still by cell-specific reference signals, while service data (broadcast information can be taken as special service data in the service symbols, namely the data received by every UE) are demodulated by layered UE-specific reference signals, thus reducing the overhead of reference signals without evidently reducing the transmit diversity performance of the virtual antenna mapping technology. Therefore, the broadcast channel and the control channel apply relatively fixed virtual antenna mapping manner (e.g. 2 antenna ports and 4 antenna ports) to realize transmit diversity. The broadcast channel and the control channel can be SFBC or SFBC+ Phase Shift Diversity (PSD), or other forms. The reference signal pattern of the RB where the broadcast channel is located is the same as the reference signal pattern of the RB where the service data are located.

Fig. 2 shows a flowchart of a method of demodulating using a reference signal for demodulation according to an embodiment of the present disclosure. The flow is performed on a UE side. As shown in Fig. 2, the method of demodulating a reference signal for demodulation comprises:

step S201: the UE demodulates control information by using cell-specific reference signals configured on control symbols;
step S203: the UE demodulates service data and broadcast data by using UE-specific reference signals configured on service symbols.

Furthermore, when the reference signal demodulation is performed, a base station can perform scrambling on a broadcast channel identifier during reference signal transmission, therefore, the UE needs to descramble the broadcast channel identifier of the broadcast channel carried on the service symbols when it receives the reference signals. For example, a common RNTI is used as a channel identifier of the broadcast channel, the common RNTI is known to all UEs, and each UE uses the common RNTI to perform descrambling.

In addition, for the receiving side, the UE obtains transmitted data of all physical antennas without need of splitting data while only needing to estimate a comprehensive Hnm (n is the number of a receiving antenna and m is the port number of a transmitting antenna) by using the reference signals. For example, Hn1 is corresponding to the comprehensive channel response of Tx0 and Tx3, i.e. $h_{n1} = h_{n1} + h_{n3}e^{i\theta_1}$ and then Alamouti decoding is performed. In this way, the UE can receive broadcast information and control information by using a diversity receiving method involving two antennas of the LTE, e.g. the diversity receiving method involving 2 virtual antennas as shown in Fig. 3.

According to the aforementioned embodiment, the present disclosure further provides a method of processing a reference signal for demodulation, comprising:

a base station configures cell-specific reference signals on control symbols and configures UE-specific reference signals on service symbols; the UE demodulates control information by using the cell-specific reference signals and demodulates service data and broadcast data by using the UE-specific reference signals;
wherein the control symbols are Orthogonal Frequency Division Multiplexing (OFDM) symbols carrying control information, and the service symbols are OFDM symbols without carrying control information.

The configuration and demodulation processes of demodulate reference signal of the present disclosure are described hereinafter with examples.

Example 1

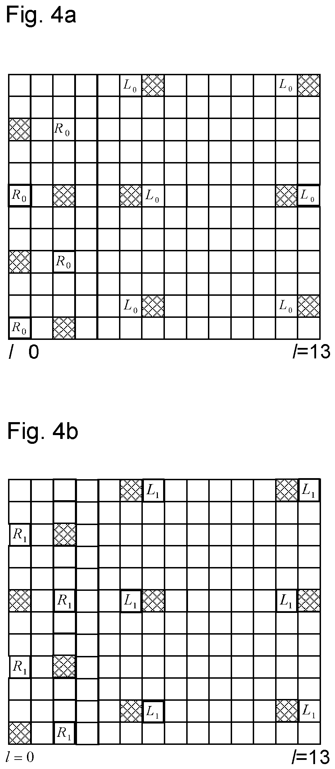

Fig. 4a shows a schematic diagram of a reference signal mapping pattern of antenna port 0, and Fig. 4b shows a schematic diagram of a reference signal mapping pattern of antenna port 1.

As shown in Fig. 4a, $R_0$ represents a cell-specific reference signal of antenna port 0, $L_0$ represents a dedicated reference signal of layer 0 of a user, the number of OFDM symbols for transmitting control information is 3, that is, the number of control symbols is 3, and the number of service symbols is 11, wherein the control symbols are OFDM symbols numbered with I=0, 1, 2, and the service symbols are OFDM symbols numbered with I=3~13. In addition, $L_0$ is used for demodulating broadcast data and service data, the antenna port 0 carries the UE-specific reference signals of the layer 0. Since the number of layers of the UE-specific reference signals is configured the same as the number of channel layers used for transmitting service data in the service channel, a base station transmits data of the service channel by using the layer 0 and layer 1. In addition, it can be seen from Fig. 4a that the interval between neighboring UE-specific reference signals on the same sub-carrier is 6 OFDM symbols. The minimal interval between UE-specific reference signals on the same OFDM symbol or different OFDM symbols is 4 sub-carriers.

As shown in Fig. 4b, $R_1$ represents a cell-specific reference signal of antenna port 1, $L_1$ represents a UE-specific reference signal, the number of OFDM symbols for transmitting control information is 3, that is, the number of control symbols is 3, and the number of service symbols is 11, wherein the control symbols are OFDM symbols numbered with I=0, 1, 2, and the service symbols are OFDM symbols numbered with I=3~13. The UE-specific reference signals $L_0$ and $L_1$ are used for demodulating broadcast data and service data of layer 0 and layer 1. The number of layer of UE-specific reference signals of the antenna port 0 is 1. Since the number of layers of the UE-specific reference signals is configured the same as the number of channel layers for transmitting service data in the service channel, a base station transmits data of the service channel by using layer 0 and layer 1. In addition, it can be seen from Fig. 4b that the interval between neighboring UE-specific reference signals on the same sub-carrier is 6 OFDM symbols. The minimal interval between UE-specific reference signals on the same OFDM symbol or different OFDM symbols is 4 sub-carriers.

In this example, the number of the OFDM symbols for transmitting control information is 3 and the number of layers for transmitting service data is 2 (antenna port 0 and antenna port 1 respectively use one layer of the service channel to transmit service data). The reference signals on the service symbols are in the form of frequency division multiplexing. For example, the number of transmitting antennas is 4, the service data is transmitted in the manner of transmit diversity and the control information is transmitted in the manner of transmit diversity, the Physical Control Format Indicator Channel (PCFICH) notifies a current sub-frame that there are 3 OFDM symbols for transmitting control information, and both the number of channel layers for transmitting service data and that for transmitting broadcast data are two, in this way, the specific steps for realizing reference signal configuration and demodulation are as follows:

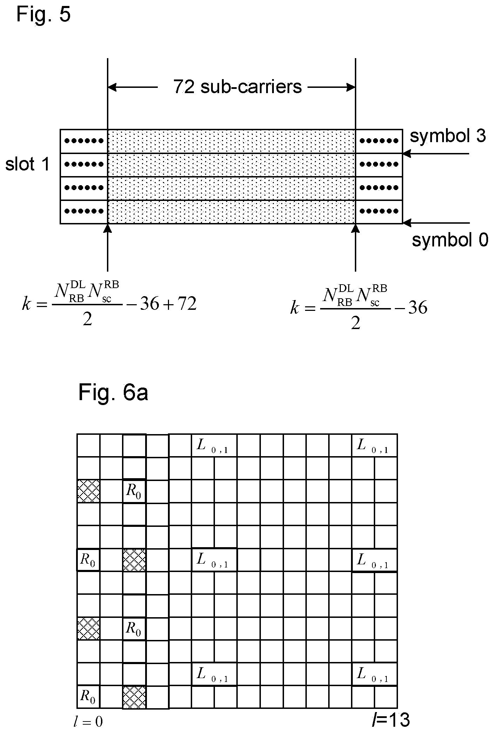

step 1: a sender (e.g. a base station) maps a reference signal sequence (cell-specific reference signals and UE-specific reference signals) to corresponding time-frequency resources according to the reference signal patterns of Fig. 4a and Fig. 4b;
step 2: the sender performs resource mapping for the broadcast data according to the reference signal patterns of the service symbols and performs scrambling by using a configured common RNTI to ensure that all UEs can receive broadcast information. Fig. 5 shows a schematic diagram of the time-frequency resources occupied by the broadcast information. The data at this time-frequency location need to be configured to be received by all UEs;

step 3: the sender maps the control information to the control symbols according to the cell-specific reference signal pattern on the control symbols and applies virtual antenna transmit diversity or other transmit diversity schemes, such as

$$\begin{bmatrix} s_1 & -s_2^* \\ s_2 & s_1^* \\ s_1 e^{j\theta_1} & -s_2^* e^{j\theta_1} \\ s_2 e^{j\theta_2} & s_1^* e^{j\theta_2} \end{bmatrix};$$

step 4: the UE-specific reference signals carried on the service symbols apply patterns of FDM access; and resource mapping is performed on the service data at the sender according to the reference signal patterns of two antenna ports (antenna port 0 and antenna port 1), as shown in Fig. 4a and Fig. 4b;

step 5: the UE receives the broadcast information according to a predetermined RNTI, acquires information related to antennas and bandwidth, determines the reference signal pattern of the control symbols according to the number of the antennas, and determines the number of downlink available resource blocks and the frequency resources of the whole bandwidth according to the bandwidth; as for the broadcast data, since the transmit diversity scheme is applied, the number of layers is not the number of separable layers of a spatial channel, but the number of antenna ports (or virtual ports) applied to the transmit diversity;

step 6: the UE detects the PCFICH on the first OFDM symbol and determines the number of the OFDM symbols for transmitting the control information; the UE detects its corresponding control information on corresponding OFDM symbols, including Downlink Control Information (DCI);

step 7: the UE performs channel estimation according to the reference signal patterns as shown in Fig. 4a and Fig. 4b and thus receives service data on a corresponding RB according to the received DCI.

Example 2

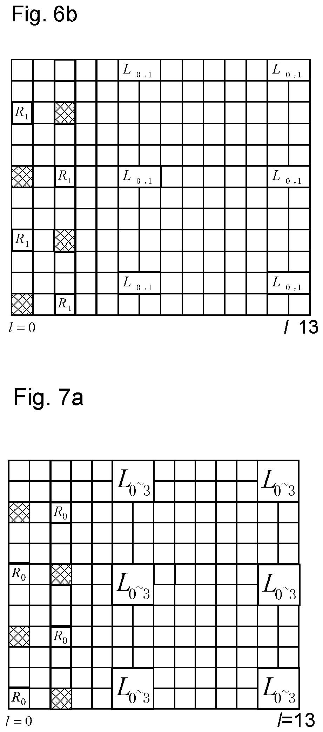

Fig. 6a shows a schematic diagram of a reference signal mapping pattern of antenna port 0, and Fig. 6b shows a schematic diagram of a reference signal mapping pattern of antenna port 1.

As shown in Fig. 6a, $R_0$ represents a cell-specific reference signal of antenna port 0, $L_{0,1}$ represents a UE-specific reference signal, the number of OFDM symbols for transmitting control information is 3, that is, the number of control symbols is 3, and the number of service symbols is 11, wherein the control symbols are OFDM symbols numbered with I=0, 1, 2 and the service symbols are OFDM symbols numbered with I=3-13. In addition, the UE-specific reference signals $L_{0,1}$ are used for demodulating broadcast data and service data of layer 0 and layer 1. Since the number of layers of the UE-specific reference signals is configured the same as the number of channel layers for transmitting service data in the service channel, a base station transmits data of the service channel by using layer 0 and layer 1. In addition, it can be seen from Fig. 6a that the interval between neighboring UE-specific reference signals on the same sub-carrier is 5 OFDM symbols. The minimal interval between UE-specific reference signals on the same OFDM symbol or different OFDM symbols is 4 sub-carriers.

As shown in Fig. 6b, $R_0$ represents a cell-specific reference signal of antenna port 1, $L_{0,1}$ represents a UE-specific reference signal, the number of OFDM symbols for transmitting control information is 3, that is, the number of control symbols is 3, and the number of service symbols is 11, wherein the control symbols are OFDM symbols numbered with I=0, 1, 2 and the service symbols are OFDM symbols numbered with I=3-13. The UE-specific reference signals $L_0$ and $L_1$ are used for demodulating broadcast data and service data of layer 0 and layer 1. The number of layers of the UE-specific reference signals of antenna port 0 is 2. Since the number of layers of the UE-specific reference signals is configured the same as the number of channel layers for transmitting service data in the service channel, the base station transmits data of the service channel by using layer 0 and layer 1. In addition, it can be seen from Fig. 6b that the interval between neighboring UE-specific reference signals on the same sub-carrier is 5 OFDM symbols. The minimal interval between UE-specific reference signals on the same OFDM symbol or different OFDM symbols is 4 sub-carriers.

In this example, the number of the OFDM symbols for transmitting control information is 3 and the number of layers for transmitting service data is 2 (antenna port 0 and antenna port 1 respectively use two layers of the service channel to transmit service data). The reference signals on service symbols are in the form of Code Division Multiplexing (CDM). The service data is transmitted in the manner of spatial multiplexing. The control information is transmitted in the manner of transmit diversity. The number of separable layers of a spatial channel corresponding to a UE is 2, and the data stream of the UE is mapped to the two transmission layers. The PCFICH notifies a current sub-frame that there are 3 OFDM symbols for transmitting control information. In this way, the specific steps for realizing reference signal configuration and demodulation are as follows:

step 1: a sender maps a reference signal sequence (cell-specific reference signals and UE-specific reference signals) to corresponding time-frequency resources according to the reference signal patterns of Fig. 6a and Fig. 6b;

step 2: the sender performs resource mapping for the broadcast data according to the reference signal patterns of the service symbols and performs scrambling by using a configured common RNTI to ensure that all UEs can receive the broadcast information;

step 3: the sender maps the control information to the control symbols according to the cell-specific reference signal pattern on the control symbols and applies virtual antenna transmit diversity or other transmit diversity schemes, such as SFBC+FSTD:

$$\begin{bmatrix} s_1 & -s_2^* & & \\ s_2 & s_1^* & & \\ s_1 e^{j\theta_1 k} & -s_2^* e^{j\theta_1 k} & \mathbf{0}_{4x2} \\ s_2 e^{j\theta_2 k} & s_1^* e^{j\theta_2 k} & & \\ & & s_3 & -s_4^* \\ & \mathbf{0}_{4x2} & s_4 & s_3^* \\ & & s_3 e^{j\theta_1} & -s_4^* e^{j\theta_1} \\ & & s_4 e^{j\theta_2} & s_3^* e^{j\theta_2} \end{bmatrix};$$

step 4: the UE-specific reference signals carried on the service symbols apply the patterns of CDM access; as shown in Fig. 6a and Fig. 6b, the sender can perform corresponding precoding according to the number of layers allocated to the user and perform resource mapping according to the reference signal patterns of the service symbols;

step 5: the UE receives broadcast information according to a predetermined RNTI, acquires information related to antennas and bandwidth, determines the reference signal pattern of the control symbols according to the number of the antennas, and determines the number of downlink available resource blocks and the frequency resources of the whole bandwidth according to the bandwidth; as for the broadcast data, since the transmit diversity scheme is applied, the number of layers is not the number of separable layers of a spatial channel, but the number of antenna ports (or virtual ports) applied to the transmit diversity;

step 6: the UE detects the PCFICH on the first OFDM symbol and determines the number of the OFDM symbols for transmitting control information; the UE detects its corresponding control information on corresponding OFDM symbols, including DCI;

step 7: the UE performs channel estimation according to the reference signal patterns as shown in Fig. 6a and Fig. 6b, and receives the service data on corresponding RBs by using a Precoding Matrix Indicator (PMI) in the DCI according to the received DCI.

Example 3

As shown in Fig. 7a, $R_0$ represents a cell-specific reference signal of antenna port 0, $L_{0\sim3}$ represents a UE-specific reference signal, the number of OFDM symbols for transmitting control information is 3, that is, the number of control symbols is 4, and the number of service symbols is 11, wherein the control symbols are OFDM symbols of I=0, 1, 2 and the service symbols are OFDM symbols of I=3~13. In addition, $L_{0\sim3}$ further represents that layer 0, layer 1, layer 2 and layer 3 of the UE-specific reference signals are used for demodulating broadcast data and service data, the number of layers of the UE-specific reference signals of the antenna port 0 is 4. Since the number of layers of the UE-specific reference signals is configured the same as the number of channel layers for transmitting service data in the service channel, a base station transmits data of the service channel by using layer 0, layer 1, layer 2 and layer 3. In addition, it can be seen from Fig. 7a that the interval between neighboring UE-specific reference signals on the same sub-carrier is 5 OFDM symbols, and the minimal interval between UE-specific reference signals on the same OFDM symbol or different OFDM symbols is 3 sub-carriers.

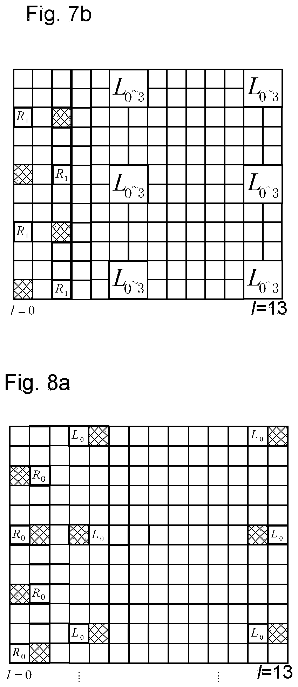

As shown in Fig. 7b, $R_0$ represents a cell-specific reference signal of antenna port 1, $L_{0\sim3}$ represents a UE-specific reference signal, the number of OFDM symbols for transmitting control information is 3, that is, the number of control symbols is 4, and the number of service symbols is 11, wherein the control symbols are OFDM symbols numbered with I=0, 1, 2 and the service symbols are OFDM symbols numbered with I=3-13. In addition, $L_{0\sim3}$ further represents that layer 0, layer 1, layer 2 and layer 3 of the UE-specific reference signals are used for demodulating broadcast data and service data, the number of layers of the UE-specific reference signals of the antenna port 0 is 4. Since the number of layers of the UE-specific reference signals is configured the same as the number of channel layers for transmitting service data in the service channel, a base station transmits data of the service channel by using layer 0, layer 1, layer 2 and layer 3. In addition, it can be seen from Fig. 7b that the interval between neighboring UE-specific reference signals on the same sub-carrier is 5 OFDM symbols, and the minimal interval between UE-specific reference signals on the same OFDM symbol or different OFDM symbols is 3 sub-carriers.

In this example, the number of the OFDM symbols for transmitting control information is 3 and the number of layers for transmitting the service data is 4 (antenna port 0 and antenna port 1 respectively use 4 transmission layers to transmit the service data). The reference signals on the service symbols are in the form of code division multiplexing. For example, the number of transmitting antennas is 8, the service data is transmitted in the manner of spatial multiplexing, the control information and the broadcast information are transmitted in the manner of transmit diversity, there are 4 separable layers for the channel, the PCFICH notifies a current sub-frame that there are 3 OFDM symbols for transmitting the control information, in this way, the specific steps for realizing reference signal configuration and demodulation are as follows:

step 1: a sender maps a reference signal sequence (cell-specific reference signals and UE-specific reference signals) to corresponding time-frequency resources according to the reference signal patterns of Fig. 7a and Fig. 7b;

step 2: the sender performs resource mapping for the broadcast data according to the reference signal patterns of the service symbols and performs scrambling by using a special RNTI to ensure that all UEs can receive the broadcast information;

step 3: the sender maps the control information to the control symbols according to the cell-specific reference signal pattern on the control symbols and applies virtual antenna transmit diversity or other transmit diversity schemes, such as SFBC+FSTD:

$$\begin{bmatrix} s_1 & -s_2^* & & \\ s_2 & s_1^* & & \\ s_1 e^{j\theta_1 k} & -s_2^* e^{j\theta_1 k} & \mathbf{0}_{4x2} & \\ s_2 e^{j\theta_2 k} & s_1^* e^{j\theta_2 k} & & \\ & & s_3 & -s_4^* \\ & \mathbf{0}_{4x2} & s_4 & s_3^* \\ & & s_3 e^{j\theta_1} & -s_4^* e^{j\theta_1} \\ & & s_4 e^{j\theta_2} & s_3^* e^{j\theta_2} \end{bmatrix};$$

step 4: the UE-specific reference signals carried on the service symbols apply the patterns of CDM access; as shown in Fig. 7a and Fig. 7b, 4 resource elements (REs) are in the form of code division, and multiplex 4 layers of reference signals. In the figures, every square represents one RE. The sender can perform corresponding precoding according to the number of layers allocated to the user and perform resource mapping according to the reference signal patterns of the service symbols;

step 5: the UE receives broadcast information according to a predetermined RNTI, acquires information related to antennas and bandwidth, determines the reference signal pattern of the control symbols according to the number of the antennas, and determines the number of downlink available resource blocks and the frequency resources of the whole bandwidth according to the bandwidth; as for the broadcast data, since the transmit diversity scheme is applied, the number of layers is not the number of separable layers of a spatial channel, but the number of antenna ports (or virtual ports) applied to the transmit diversity;

step 6: the UE detects the PCFICH on the first OFDM symbol, determines the number of the OFDM symbols for transmitting control information, and determines reference signal patterns of control symbols; the UE detects its corresponding control information on the corresponding OFDM symbols according to the reference signal pattern, including DCI;

step 7: the UE performs channel estimation according to the reference signal patterns as shown in Fig. 7a and Fig. 7b, and receives the service data on corresponding RBs by using a PMI in the DCI according to the received DCI.

Example 4

As shown in Fig. 8a, $R_0$ represents a cell-specific reference signal of antenna port 0, $L_0$ represents a UE-specific reference signal, the number of OFDM symbols for transmitting control information is 2, that is, the number of control symbols is 2, and the number of service symbols is 12, wherein the control symbols are OFDM symbols numbered with I=0, 1 and the service symbols are OFDM symbols numbered with I=2-13. In addition, $L_0$ further represents the UE-specific reference signal for demodulating broadcast data and service data. The antenna port 0 carriers the UE-specific reference signal of layer 0. Since the number of layers of the UE-specific reference signals is configured the same as the number of channel layers for transmitting the service data in the service channel, a base station transmits data of the service channel by using layer 0 and layer 1. In addition, it can be seen from Fig. 8a that the interval between neighboring UE-specific reference signals on the same sub-carrier is 6 OFDM symbols, and the minimal interval between UE-specific reference signals on the same OFDM symbol or different OFDM symbols is 4 sub-carriers.

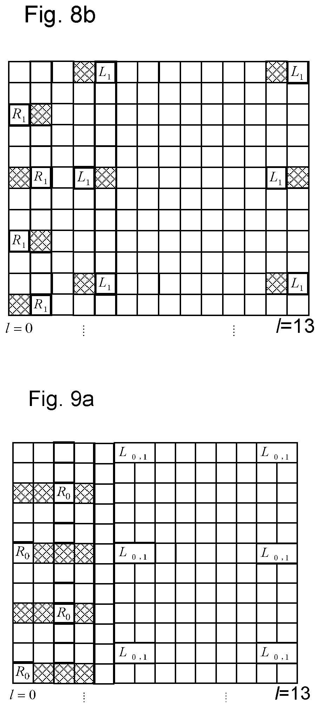

As shown in Fig. 8b, $R_1$ represents a cell-specific reference signal of antenna port 1, $L_1$ represents a UE-specific reference signal of the first layer, the number of OFDM symbols for transmitting control information is 2, that is, the number of control symbols is 2, and the number of service symbols is 12, wherein the control symbols are OFDM symbols numbered with I=0, 1 and the service symbols are OFDM symbols numbered with I=2-13. In addition, $L_0$ and $L_1$ are used for demodulating broadcast data and service data. The antenna port 1 carries the UE-specific reference signal of the first layer. Since the number of layers of the UE-specific reference signals is configured the same as the number of channel layers for transmitting service data in the service channel, a base station transmits service data by using the first layer 1of the service channel. In addition, it can be seen from Fig. 8b that the interval between neighboring UE-specific reference signals on the same sub-carrier is 6 OFDM symbols, and the minimal interval between UE-specific reference signals on the same OFDM symbol or different OFDM symbols is 4 sub-carriers.

In this example, the number of the OFDM symbols for transmitting control information is 2 and the number of layers for transmitting service data is 2 (antenna port 0 and antenna port 1 respectively use one layer to transmit the service data). The reference signals on the service symbols are in the form of FDM. For example, the number of transmitting antennas is 4, the service data is transmitted in the manner of transmit diversity and the control information is transmitted in the manner of transmit diversity; there are 2 layers respectively for the service data and the broadcast data. This example is different from examples 1, 2 and 3 in that, the PCFICH notifies a current sub-frame that there are 2 OFDM symbols for transmitting control information. In this way, the specific steps for realizing reference signal configuration and demodulation are as follows:

step 1: a sender maps a reference signal sequence (cell-specific reference signals and UE-specific reference signals) to corresponding time-frequency resources according to the reference signal patterns of Fig. 8a and Fig. 8b; since the value of the PCFICH is changed, the reference signal patterns of the control symbols and the reference signal patterns of the service symbols are changed, accordingly;

step 2: the sender performs resource mapping for the broadcast data according to the reference signal patterns of the service symbols, and performs scrambling by using special RNTI to ensure that all UEs can receive the broadcast information;

step 3: the sender maps the control information to the control symbols according to the cell-specific reference signal pattern on the control symbols and applies virtual antenna transmit diversity or other transmit diversity schemes, such as

$$\begin{bmatrix} s_1 & -s_2^* \\ s_2 & s_1^* \\ s_1 e^{j\theta_1} & -s_2^* e^{j\theta_1} \\ s_2 e^{j\theta_2} & s_1^* e^{j\theta_2} \end{bmatrix};$$

step 4: the UE-specific reference signals carried on the service symbols apply the patterns of FDM access; and resource mapping is performed on the service data at the sender according to the reference signal patterns of two antenna ports (antenna port 0 and antenna port 1), as shown in Fig. 8a and Fig. 8b;

step 5: the UE receives broadcast information according to a predetermined RNTI, acquires information related to antennas and bandwidth, determines a reference signal pattern of the control symbols according to the number of the antennas, and determines the number of downlink available resource blocks and the frequency resources of the whole bandwidth according to the bandwidth; as for the broadcast data, since the transmit diversity scheme is applied, the number of layers is not the number of separable layers of a spatial channel, but the number of antenna ports (or virtual ports) applied to the transmit diversity;

step 6: the UE detects the PCFICH on the first OFDM symbol and determines the number of OFDM symbols for transmitting control information; the UE detects its corresponding control information on the corresponding OFDM symbols, including DCI;

step 7: the UE performs channel estimation according to the reference signal patterns as shown in Fig. 8a and Fig. 8b, and receives the service data on corresponding RBs by using an algorithm for receiving transmit diversity according to the received DCI.

Example 5

As shown in Fig. 9a, $R_0$ represents a cell-specific reference signal of antenna port 0, $L_{0,1}$ represents a UE-specific reference signal. In one RB, the number of OFDM symbols for transmitting control information is 4, that is, the number of control symbols is 4, and the number of service symbols is 10, wherein the control symbols are OFDM symbols numbered with I=0, 1, 2, 3 and the service symbols are OFDM symbols numbered with I=4-13. In addition, the UE-specific reference signal $L_{0,1}$ is used for demodulating broadcast data and service data. The antenna port 0 carries UE-specific reference signals of two layers. It can be seen from Fig. 9a that the interval between neighboring UE-specific reference signals on the same sub-carrier is 5 OFDM symbols, and the minimal interval between UE-specific reference signals on the same OFDM symbol or different OFDM symbols is 4 sub-carriers.

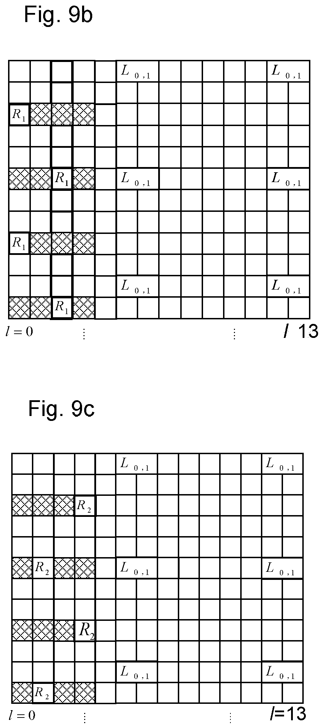

As shown in Fig. 9b, $R_1$ represents a cell-specific reference signal of antenna port 1, $L_{0,1}$ represents a UE-specific reference signal, the number of OFDM symbols for transmitting control information is 4, that is, the number of control symbols is 4, and the number of service symbols is 10, wherein the control symbols are OFDM symbols numbered with I=0, 1, 2, 3 and the service symbols are OFDM symbols numbered with I=4-13. In addition, the UE-specific reference signal $L_{0,1}$ is used for demodulating broadcast data and service data. In addition, it can be seen from Fig. 9b that the interval between neighboring UE-specific reference signals on the same sub-carrier is 5 OFDM symbols, and the minimal interval between UE-specific reference signals on the same OFDM symbol or different OFDM symbols is 4 sub-carriers.

As shown in Fig. 9c, $R_2$ represents a cell-specific reference signal of antenna port 2, $L_{0,1}$ represents a UE-specific reference signal, the number of OFDM symbols for transmitting control information is 4, that is, the number of control symbols is 4, and the number of service symbols is 10, wherein the control symbols are OFDM symbols numbered with I=0, 1, 2, 3 and the service symbols are OFDM symbols numbered with I=4-13. In addition, the UE-specific reference signal $L_{0,1}$ is used for demodulating broadcast data and service data. In addition, it can be seen from Fig. 9c that the interval between neighboring UE-specific reference signals on the same sub-carrier is 5 OFDM symbols, and the minimal interval between UE-specific reference signals on the same OFDM symbol or different OFDM symbols is 4 sub-carriers.

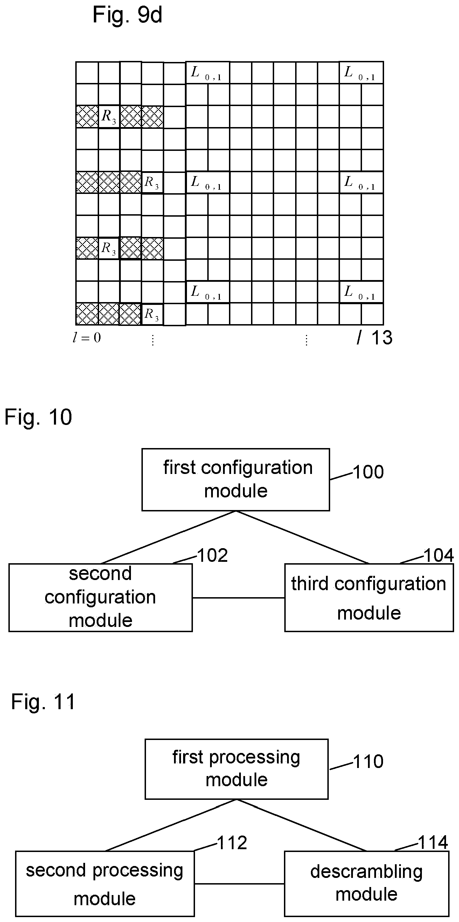

As shown in Fig. 9d, $R_3$ represents a cell-specific reference signal of antenna port 3, $L_{0,1}$ represents a UE-specific reference signal, the number of OFDM symbols for transmitting control information is 4, that is, the number of control symbols is 4, and the number of service symbols is 10, wherein the control symbols are OFDM symbols numbered with I=0, 1, 2, 3 and the service symbols are OFDM symbols numbered with I=4-13. In addition, the UE-specific reference signal $L_{0,1}$ is used for demodulating broadcast data and service data. In addition, it can be seen from Fig. 9d that the interval between neighboring UE-specific reference signals on the same sub-carrier is 5 OFDM symbols, and the minimal interval between UE-specific reference signals on the same OFDM symbol or different OFDM symbols is 4 sub-carriers.

In this example, the number of the OFDM symbols for transmitting control information is 4 and the number of layers for transmitting service data is 2 (antenna port 0 and antenna port 1 respectively use 2 transmission channel layers to transmit the service data). The reference signals on the service symbols are in the form of CDM. For example, the number of transmitting antennas is 8, the service data is transmitted in the manner of spatial multiplexing and the control information is transmitted in the manner of transmit diversity; there are 2 separable layers of a spatial channel corresponding to a UE, and the data stream of the UE is mapped to the two transmission layers; the PCFICH notifies a current sub-frame that there are 4 OFDM symbols for transmitting control information. In this way, the specific steps for realizing reference signal configuration and demodulation are as follows:

step 1: a sender maps a reference signal sequence (cell-specific reference signals and UE-specific reference signals) to corresponding time frequency resources according to the reference signal patterns of Fig. 9a, Fig. 9b, Fig. 9c and Fig. 9d;

step 2: the sender performs resource mapping for the broadcast data according to the reference signal patterns of the service symbols, and performs scrambling by a configured common RNTI to ensure that all UEs can receive the broadcast information;

step 3: the sender maps the control information to the control symbols according to the cell-specific reference signal pattern on the control symbols and applies virtual antenna transmit diversity or other transmit diversity schemes, such as SFBC+FSTD:

$$\begin{bmatrix} s_1 & -s_2^* & & \\ s_2 & s_1^* & & \\ s_1 e^{j\theta_1 k} & -s_2^* e^{j\theta_1 k} & \mathbf{0}_{4x2} & \\ s_2 e^{j\theta_2 k} & s_1^* e^{j\theta_2 k} & & \\ & & s_3 & -s_4^* \\ & & s_4 & s_3^* \\ \mathbf{0}_{4x2} & & s_3 e^{j\theta_1} & -s_4^* e^{j\theta_1} \\ & & s_4 e^{j\theta_2} & s_3^* e^{j\theta_2} \end{bmatrix};$$

step 4: the UE-specific reference signals carried on the service symbols apply the patterns of CDM access; and as shown in Fig. 6a and Fig. 6b, the sender can perform corresponding precoding according to the layers allocated to the user and perform resource mapping according to the reference signal patterns of the service symbols;

step 5: the UE receives broadcast information according to a predetermined RNTI, acquires information related to antennas and bandwidth, determines a reference signal pattern of the control symbols according to the number of the antennas, and determines the number of downlink available resource blocks and the frequency resources of the whole bandwidth according to the bandwidth; as for the broadcast data, since the transmit diversity scheme is applied, the number of layers is not the number of separable layers of a spatial channel, but the number of antenna ports (or virtual ports) applied to the transmit diversity;

step 6: the UE detects the PCFICH on the first OFDM symbol and determines the number of OFDM symbols for transmitting control information; the UE detects its corresponding control information on the corresponding OFDM symbols, including DCI;

step 7: the UE performs channel estimation according to the reference signal patterns as shown in Fig. 9a, Fig. 9b, Fig. 9c and Fig. 9d and receives the service data on corresponding RBs by using a PMI in the DCI according to the received DCI.

Fig. 10 shows a structure block diagram of a base station according to an embodiment of the present disclosure. As shown in Fig. 10, the base station comprises:

a first configuration module 100 for configuring cell-specific reference signals on control symbols, wherein the pattern of the cell-specific reference signals may be a current reference signal pattern of all antenna ports in the prior art; a second configuration module 102 for configuring UE-specific reference signals on service symbols, and making a broadcast channel and a service channel carried on the service symbols, wherein the broadcast channel is used for transmitting broadcast information and the service channel is used for transmitting service data, wherein the control symbols are OFDM symbols carrying control information and the service symbols are OFDM symbols without carrying control information. When the second configuration module 102 configures UE-specific reference signals on the service symbols, the following configuration rules may be applied: the interval between neighboring UE-specific reference signals on the same sub-carrier is N OFDM symbols, wherein N =4, 5, 6 or 7; the minimal interval between UE-specific reference signals on the same or different OFDM symbols is M sub-carriers, wherein M=3 or 4. Here, only the relative locations of all UE-specific reference signals are specified, and every specific downlink-dedicated location can be flexibly configured according to the need, as long as the relative locations of all UE-specific reference signals satisfy the aforementioned rules. In addition, the number of layers of the UE-specific reference signals is configured the same as the number of channel layers for transmitting service data in the service channel.

Preferably, the base station may further comprise a third configuration module 104 for configuring a channel identifier for the broadcast channel, and sending the channel identifier to the base station and a user, wherein the channel identifier can be scrambled by the base station. For example, the channel identifier may be a radio network temporary identifier.

Fig. 11 shows a structure block diagram of a user equipment according to an embodiment of the present disclosure. As shown in Fig. 11, the UE comprises:

a first processing module 110 for demodulating control information by using cell-specific reference signals configured on control symbols;
a second processing module 112 for demodulating service data and broadcast data by using UE-specific reference signals configured on service symbols; wherein the control symbols are OFDM symbols carrying control information and the service symbols are OFDM symbols without carrying control information.

Preferably, the UE further comprises a descrambling module 114 for descrambling a channel identifier of the broadcast channel carried on the service symbols to receive broadcast information.

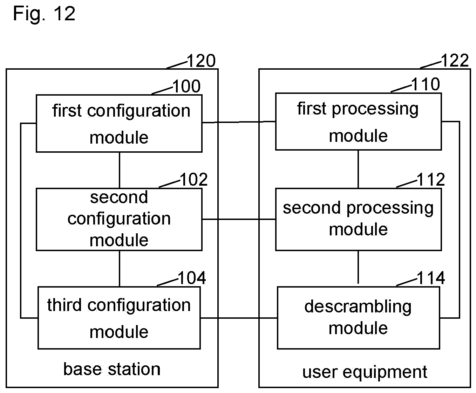

According to the method of processing a reference signal for demodulation described above, a system of processing a reference signal for demodulation of the present disclosure is as shown in Fig. 12, comprising a base station 120 and a UE 122, wherein the base station 120 may be the base station as shown in Fig. 10 and the UE 122 may be the UE as shown in Fig. 11. Therefore, it is unnecessary to go into details here.

Fig. 10 and Fig. 11 show the devices corresponding to the aforementioned methods. The working process and working principles of the devices are described in details in the methods, which can refer to the description of the corresponding parts in the methods. Therefore, it is unnecessary to go into details here.

In conclusion, with the aforementioned technical solution of the present disclosure, the objective of reducing the overhead of reference signals can be achieved by respectively designing the reference signals on the service symbols and that on the control symbols. In addition, the reference signals on the broadcast channel and the reference signals on the service channel are designed uniformly, so that the design of the reference signals on the service symbols is simplified, and the overhead of reference signals is reduced while the transmit diversity performance is not evidently reduced for the virtual antenna mapping technology. Further, since this disclosure relates to the design of a demodulate reference signal (DMRS) in the multi-antenna communication system, the present disclosure can be applied to a multiple input multiple output system (MIMO) with multiple transmitting antennas.

What are described above are only preferred embodiments of the present disclosure and are not for use in limiting the present disclosure. Any modification, equivalent replacement and improvement made within the principle of the present disclosure should be included in the protection scope of the present disclosure.

**Claims**

1. A method of configuring a reference signal for demodulation, in a Long-Term Evolution, LTE, system, comprising:

configuring (S101, S103), by a base station, cell-specific reference signals on control symbols and User Equipment, UE-specific, reference signals on service symbols;
making, by the base station, a control channel for transmitting the control information carried on the control symbols; and
making, by the base station, a broadcast channel for transmitting broadcast information carried on the service symbols and making a service channel for transmitting service data carried on the service symbols, the broadcast information is scrambled with a channel identifier of the broadcast channel;
wherein the control symbols and the service symbols are Orthogonal Frequency Division Multiplexing, OFDM, symbols, and **characterized in that** the cell-specific reference signals and the control information are transmitted in all resources of OFDM symbols transmitting the control channel; and the UE-specific reference signals, the broadcast information and the service data are transmitted in all resources of OFDM symbols transmitting the service channel.

2. The method according to claim 1, wherein an interval between neighboring UE-specific reference signals on a same sub-carrier is N OFDM symbols, wherein N is 4, 5, 6 or 7; a minimal interval between UE-specific reference signals on a same OFDM symbol or different OFDM symbols is M sub-carriers, wherein M=3 or 4.

3. The method according to claim 1, further comprising: when configuring the UE-specific reference signals on the service symbols, configuring a number of spatial multiplexing layers of the UE-specific reference signals as same as a number of channel layers for transmitting the service data in the service channel to obtain layered UE-specific reference signals; and using the layered UE-specific reference signals to demodulate the service data and the broadcast information.

4. The method according to claim 2, further comprising:
configuring, by the base station, the channel identifier for the broadcast channel, wherein the channel identifier can be used by the base station for scrambling the broadcast information.

5. The method according to claim 4, wherein the channel identifier is a radio network temporary identifier.

6. A method of demodulating using a reference signal for demodulation, in a Long-Term Evolution, LTE, system, comprising:

demodulating (S201), by a User Equipment, UE, control information by using cell-specific reference signals configured on control symbols, and demodulating (S203) service data and broadcast information by using UE-specific reference signals configured on service symbols; and
using, by the UE, a channel identifier of a broadcast channel to descramble broadcast information carried on the service symbols to receive the broadcast information,
wherein the control symbols and the service symbols are Orthogonal Frequency Division Multiplexing, OFDM, symbols, and **characterized in that** the cell-specific reference signals and the control information are transmitted in all resources of OFDM symbols transmitting the control channel; and the UE-specific reference signals, the broadcast information and the service data are transmitted in all resources of OFDM symbols transmitting the service channel.

7. A method of processing a reference signal for demodulation, in a Long-Term Evolution, LTE, system, comprising:

configuring, by a base station, cell-specific reference signals on control symbols and User Equipment, UE-specific reference signals on service symbols;
making, by the base station, a control channel for transmitting the control information carried on the control symbols;
making, by the base station, a broadcast channel for transmitting broadcast information carried on the service symbols and making a service channel for transmitting service data carried on the service symbols, the broadcast information is scrambled with a channel identifier of the broadcast channel;
demodulating, by a UE, the control information by using the cell-specific reference signals and demodulating the service data and the broadcast information by using the UE-specific reference signals; and
using, by the UE, the channel identifier of the broadcast channel to descramble the broadcast information carried on the service symbols to receive the broadcast information;
wherein the control symbols and the service symbols are Orthogonal Frequency Division Multiplexing, OFDM, symbols, and
**characterized in that** the cell-specific reference signals and the control information are transmitted in all resources of OFDM symbols transmitting the control channel; and the UE-specific reference signals, the broadcast information and the service data are transmitted in all resources of OFDM symbols transmitting the service channel.

8. A base station in a Long-Term Evolution, LTE, system, comprising:

a first configuration module (100) for configuring cell-specific reference signals on control symbols, and making a control channel for transmitting control information carried on the control symbols;
a second configuration module (102) for configuring UE-specific reference signals on service symbols, and making a broadcast channel carried on the service symbols and making a service channel carried on the service symbols, wherein the broadcast channel is configured to transmit broadcast information and the service channel is configured to transmit service data, the broadcast information is scrambled with a channel identifier of the broadcast channel;
wherein the control symbols and the service symbols are Orthogonal Frequency Division Multiplexing, OFDM, symbols, and **characterized in that** the cell-specific reference signals and the control information are transmitted in all resources of OFDM symbols transmitting the control channel; and the UE-specific reference signals, the broadcast information and the service data are transmitted in all resources of OFDM symbols transmitting the service channel.

9. The base station according to claim 8, wherein an interval between neighboring User Equipment, UE-specific reference signals on a same sub-carrier is N OFDM symbols, wherein N=4, 5, 6 or 7;
a minimal interval between UE-specific reference signals on a same OFDM symbol or different OFDM symbols is M sub-carriers, wherein M=3 or 4.

10. A User equipment, UE, in a Long-Term Evolution, LTE, system, comprising:

a first processing module (110) for demodulating control information by using cell-specific reference signals configured on control symbols;
a second processing module (112) for demodulating service data and broadcast information by using UE-specific reference signals configured on service symbols; and using a channel identifier of a broadcast channel to descramble broadcast information carried on the service symbols to receive the broadcast information;
wherein the control symbols and the service symbols are Orthogonal Frequency Division Multiplexing, OFDM, symbols, and **characterized in that** the cell-specific reference signals and the control information are transmitted in all resources of OFDM symbols transmitting the control channel; and the UE-specific reference signals, the broadcast information and the service data are transmitted in all resources of OFDM symbols transmitting the service channel.

11. A system of processing a reference signal for demodulation, in a Long-Term Evolution, LTE, system, comprising a base station and a User Equipment, UE,
wherein the base station is configured to configure cell-specific reference signals on control symbols and UE-specific reference signals on service symbols, and the base station comprises:

a first configuration module (100) for configuring the cell-specific reference signals on the control symbols, and making a control channel for transmitting the control information carried on the control symbols;
a second configuration module (102) for configuring the UE-specific reference signals on the service symbols, and making a broadcast channel carried on the service symbols and making a service channel carried on the service symbols, wherein the broadcast channel is configured to transmit broadcast information and the service channel is configured to transmit service data, the broadcast information is scrambled with a channel identifier of the broadcast channel;
the UE is configured to demodulate the control information by using the cell-specific reference signals, and to demodulate the service data and the broadcast information by using the UE-specific reference signals, and the UE comprises:

a first processing module (110) for demodulating the control information by using the cell-specific reference signals configured on the control symbols;
a second processing module (112) for demodulating the service data and broadcast information by using the UE-specific reference signals configured on the service symbols; and using the channel identifier of the broadcast channel to descramble the broadcast information carried on the service symbols to receive the broadcast information;

wherein the control symbols and the service symbols are Orthogonal Frequency Division Multiplexing, OFDM, symbols, and **characterized in that** the cell-specific reference signals and the control information are transmitted in all resources of OFDM symbols transmitting the control channel; and the UE-specific reference signals, the broadcast information and the service data are transmitted in all resources of OFDM symbols transmitting the service channel.

**Patentansprüche**

1. Verfahren zum Konfigurieren eines Referenzsignals zur Demodulation in einem LTE-System (Long Term Evolution), umfassend:

Konfigurieren (S101, S103), durch eine Basisstation, zellspezifischer Referenzsignale auf Steuersymbolen und UE-spezifischer (User Equipment / Endgerät) Referenzsignale auf Dienstsymbolen;
Einrichten, durch die Basisstation, eines Steuerkanals zum Übertragen der auf den Steuersymbolen getragenen Steuerinformationen; und

Einrichten, durch die Basisstation, eines Rundsendekanals zum Übertragen von Rundsendeinformationen, die auf den Dienstsymbolen getragen werden, und Einrichten eines Dienstkanals zum Übertragen von Dienstdaten, die auf den Dienstsymbolen getragen werden, wobei die Rundsendeinformationen mit einer Kanalkennung des Rundsendekanals verwürfelt werden;

wobei die Steuersymbole und die Dienstsymbole OFDM-Symbole (Orthogonal Frequency Division Multiplexing / Orthogonales Frequenzmultiplexverfahren) sind, und

**dadurch gekennzeichnet, dass** die zellspezifischen Referenzsignale und die Steuerinformationen in allen Ressourcen von OFDM-Symbolen übertragen werden, die den Steuerkanal übertragen; und die UE-spezifischen Referenzsignale, die Rundsendeinformationen und die Dienstdaten in allen Ressourcen von OFDM-Symbolen übertragen werden, die den Dienstkanal übertragen.

2. Verfahren gemäß Anspruch 1, wobei ein Intervall zwischen benachbarten UE-spezifischen Referenzsignalen auf einem gleichen Unterträger N OFDM-Symbole beträgt, wobei N = 4, 5, 6 oder 7 ist; ein minimales Intervall zwischen UE-spezifischen Referenzsignalen auf einem gleichen OFDM-Symbol oder unterschiedlichen OFDM-Symbolen M Unterträger beträgt, wobei M = 3 oder 4 ist.

3. Verfahren gemäß Anspruch 1, ferner umfassend: wenn die UE-spezifischen Referenzsignale auf den Dienstsymbolen konfiguriert werden, Konfigurieren einer Anzahl räumlicher Multiplex-Ebenen der UE-spezifischen Referenzsignale, sodass sie gleich einer Anzahl von Kanalschichten ist, zum Übertragen der Dienstdaten in dem Dienstkanal zum Erhalten geschichteter UE-spezifischer Referenzsignale; und Verwenden der geschichteten UE-spezifischen Referenzsignale zum Demodulieren der Dienstdaten und der Rundsendeinformationen.

4. Verfahren gemäß Anspruch 2, ferner umfassend:
Konfigurieren, durch die Basisstation, der Kanalkennung für den Rundsendekanal, wobei die Kanalkennung von der Basisstation zum Verwürfeln der Rundsendeinformationen verwendet werden kann.

5. Verfahren gemäß Anspruch 4, wobei die Kanalkennung eine temporäre Kennung in einem Funknetz (Radio Network Temporary Identifier) ist.

6. Verfahren zum Demodulieren unter der Verwendung eines Referenzsignals zur Demodulation in einem LTE-System (Long Term Evolution), umfassend:

Demodulieren (S201), durch ein Endgerät (User Equipment / UE) von Steuerinformationen durch die Verwendung zellspezifischer Referenzsignale, die auf Steuersymbolen konfiguriert sind, und Demodulieren (S203) von Dienstdaten und Rundsendeinformationen durch die Verwendung UE-spezifischer Referenzsignale, die auf Dienstsymbolen konfiguriert sind; und

Verwenden, durch das UE, einer Kanalkennung eines Rundsendekanals zum Entwürfeln von Rundsendeinformationen, die auf den Dienstsymbolen getragen werden, zum Empfangen der Rundsendeinformationen,

wobei die Steuersymbole und die Dienstsymbole OFDM-Symbole (Orthogonal Frequency Division Multiplexing / Orthogonales Frequenzmultiplexverfahren) sind, und

**dadurch gekennzeichnet, dass** die zellspezifischen Referenzsignale und die Steuerinformationen in allen Ressourcen von OFDM-Symbolen übertragen werden, die den Steuerkanal übertragen; und die UE-spezifischen Referenzsignale, die Rundsendeinformationen und die Dienstdaten in allen Ressourcen von OFDM-Symbolen übertragen werden, die den Dienstkanal übertragen.

7. Verfahren zum Verarbeiten eines Referenzsignals zur Demodulation in einem LTE-System (Long Term Evolution), umfassend:

Konfigurieren, durch eine Basisstation, zellspezifischer Referenzsignale auf Steuersymbolen und UE-spezifischer (User Equipment / Endgerät) Referenzsignale auf Dienstsymbolen;

Einrichten, durch die Basisstation, eines Steuerkanals zum Übertragen der auf den Steuersymbolen getragenen Steuerinformationen; und

Einrichten, durch die Basisstation, eines Rundsendekanals zum Übertragen von Rundsendeinformationen, die auf den Dienstsymbolen getragen werden, und Einrichten eines Dienstkanals zum Übertragen von Dienstdaten, die auf den Dienstsymbolen getragen werden, wobei die Rundsendeinformationen mit einer Kanalkennung des Rundsendekanals verwürfelt werden;

Demodulieren, durch ein UE, der Steuerinformationen unter Verwendung der zellspezifischen Referenzsignale und Demodulieren der Dienstdaten und der Rundsendeinformationen unter Verwendung der UE-spezifischen Referenzsignale; und

Verwenden, durch das UE, der Kanalkennung des Rundsendekanals zum Entwürfeln der Rundsendeinformationen, die auf den Dienstsymbolen getragen werden, zum Empfangen der Rundsendeinformationen; wobei die Steuersymbole und die Dienstsymbole OFDM-Symbole (Orthogonal Frequency Division Multiplexing / Orthogonales Frequenzmultiplexverfahren) sind, und

**dadurch gekennzeichnet, dass** die zellspezifischen Referenzsignale und die Steuerinformationen in allen Ressourcen von OFDM-Symbolen übertragen werden, die den Steuerkanal übertragen; und die UE-spezifischen Referenzsignale, die Rundsendeinformationen und die Dienstdaten in allen Ressourcen von OFDM-Symbolen übertragen werden, die den Dienstkanal übertragen.

8. Basisstation in einem LTE-System (Long Term Evolution), umfassend:

ein erstes Konfigurationsmodul (100) zum Konfigurieren zellspezifischer Referenzsignale auf Steuersymbolen und Einrichten eines Steuerkanals zum Übertragen auf den Steuersymbolen getragener Steuerinformationen; ein zweites Konfigurationsmodul (102) zum Konfigurieren UE-spezifischer Referenzsignale auf Dienstsymbolen und Einrichten eines Rundsendekanals, der auf den Dienstsymbolen getragen wird, und Einrichten eines Dienstkanals, der auf den Dienstsymbolen getragen wird, wobei der Rundsendekanal dazu konfiguriert ist, Rundsendeinformationen zu übertragen, und der Dienstkanal dazu konfiguriert ist, Dienstdaten zu übertragen, wobei die Rundsendeinformationen mit einer Kanalkennung des Rundsendekanals verwürfelt werden; wobei die Steuersymbole und die Dienstsymbole OFDM-Symbole (Orthogonal Frequency Division Multiplexing / Orthogonales Frequenzmultiplexverfahren) sind, und

**dadurch gekennzeichnet, dass** die zellspezifischen Referenzsignale und die Steuerinformationen in allen Ressourcen von OFDM-Symbolen übertragen werden, die den Steuerkanal übertragen; und die UE-spezifischen Referenzsignale, die Rundsendeinformationen und die Dienstdaten in allen Ressourcen von OFDM-Symbolen übertragen werden, die den Dienstkanal übertragen.

9. Basisstation gemäß Anspruch 8, wobei ein Intervall zwischen benachbarten UE-spezifischen (User Equipment / Endgerät) Referenzsignalen auf einem gleichen Unterträger N OFDM-Symbole beträgt, wobei N = 4, 5, 6 oder 7 ist; ein minimales Intervall zwischen UE-spezifischen Referenzsignalen auf einem gleichen OFDM-Symbol oder unterschiedlichen OFDM-Symbolen M Unterträger beträgt, wobei M = 3 oder 4 ist.

10. Endgerät (User Equipment / UE) in einem LTE-System (Long Term Evolution), umfassend:

ein erstes Verarbeitungsmodul (110) zum Demodulieren von Steuerinformationen unter Verwendung zellspezifischer Referenzsignale, die auf Steuersymbolen konfiguriert sind; ein zweites Verarbeitungsmodul (112) zum Demodulieren von Dienstdaten und Rundsendeinformationen unter Verwendung UE-spezifischer Referenzsignale, die auf Dienstsymbolen konfiguriert sind; und Verwenden einer Kanalkennung auf einem Rundsendekanal zum Entwürfeln von Rundsendeinformationen, die auf den Dienstsymbolen getragen werden, zum Empfangen der Rundsendeinformationen; wobei die Steuersymbole und die Dienstsymbole OFDM-Symbole (Orthogonal Frequency Division Multiplexing / Orthogonales Frequenzmultiplexverfahren) sind, und

**dadurch gekennzeichnet, dass** die zellspezifischen Referenzsignale und die Steuerinformationen in allen Ressourcen von OFDM-Symbolen übertragen werden, die den Steuerkanal übertragen; und die UE-spezifischen Referenzsignale, die Rundsendeinformationen und die Dienstdaten in allen Ressourcen von OFDM-Symbolen übertragen werden, die den Dienstkanal übertragen.

11. System zum Verarbeiten eines Referenzsignals zur Demodulation in einem LTE-System (Long Term Evolution), umfassend eine Basisstation und ein Endgerät (User Equipment / UE),

wobei die Basisstation dazu konfiguriert ist, zellspezifische Referenzsignale auf Steuersymbolen und UE-spezifische Referenzsignale auf Dienstsymbolen zu konfigurieren, und die Basisstation umfasst:

ein erstes Konfigurationsmodul (100) zum Konfigurieren zellspezifischer Referenzsignale auf den Steuersymbolen und Einrichten eines Steuerkanals zum Übertragen der auf den Steuersymbolen getragenen Steuerinformationen; ein zweites Konfigurationsmodul (102) zum Konfigurieren der UE-spezifischen Referenzsignale auf den Dienstsymbolen und Einrichten eines Rundsendekanals, der auf den Dienstsymbolen getragen wird, und Einrichten eines Dienstkanals, der auf den Dienstsymbolen getragen wird, wobei der Rundsendekanal dazu konfiguriert ist, Rundsendeinformationen zu übertragen, und der Dienstkanal dazu konfiguriert ist, Dienstdaten zu übertragen, wobei die Rundsendeinformationen mit einer Kanalkennung des Rundsendekanals verwürfelt werden;

das UE dazu konfiguriert ist, die Steuerinformationen unter Verwendung der zellspezifischen Referenzsignale zu demodulieren und die Dienstdaten und die Rundsendeinformationen unter Verwendung der UE-spezifischen Referenzsignale zu demodulieren, und das UE umfasst:

ein erstes Verarbeitungsmodul (110) zum Demodulieren der Steuerinformationen unter Verwendung der zellspezifischen Referenzsignale, die auf den Steuersymbolen konfiguriert sind;
ein zweites Verarbeitungsmodul (112) zum Demodulieren der Dienstdaten und Rundsendeinformationen unter Verwendung der UE-spezifischen Referenzsignale, die auf den Dienstsymbolen konfiguriert sind; und zum Verwenden der Kanalkennung des Rundsendekanals zum Entwürfeln der Rundsendeinformationen, die auf den Dienstsymbolen getragen werden, zum Empfangen der Rundsendeinformationen;
wobei die Steuersymbole und die Dienstsymbole OFDM-Symbole (Orthogonal Frequency Division Multiplexing / Orthogonales Frequenzmultiplexverfahren) sind, und
**dadurch gekennzeichnet, dass** die zellspezifischen Referenzsignale und die Steuerinformationen in allen Ressourcen von OFDM-Symbolen übertragen werden, die den Steuerkanal übertragen; und die UE-spezifischen Referenzsignale, die Rundsendeinformationen und die Dienstdaten in allen Ressourcen von OFDM-Symbolen übertragen werden, die den Dienstkanal übertragen.

## Revendications

1. Procédé de configuration d'un signal de référence pour une démodulation, dans un système à évolution de long terme, LTE, comprenant :

la configuration (S101, S103), par une station de base, de signaux de référence spécifiques à la cellule sur des symboles de commande et de signaux de référence spécifiques à l'équipement d'utilisateur, UE, sur des symboles de service ;
la constitution, par la station de base, d'un canal de commande pour transmettre l'information de commande qui est portée sur les symboles de commande ; et
la constitution, par la station de base, d'un canal de diffusion pour transmettre une information de diffusion qui est portée sur les symboles de service et la constitution d'un canal de service pour transmettre des données de service qui sont portées sur les symboles de service, l'information de diffusion est brouillée avec un identifiant de canal du canal de diffusion ; dans lequel :

les symboles de commande et les symboles de service sont des symboles de multiplexage par répartition orthogonale de la fréquence, OFDM ; et
**caractérisé en ce que** les signaux de référence spécifiques à la cellule et l'information de commande sont transmis dans toutes les ressources de symboles OFDM transmettant le canal de commande ; et les signaux de référence spécifiques à l'UE, l'information de diffusion et les données de service sont transmis dans toutes les ressources de symboles OFDM transmettant le canal de service.

2. Procédé selon la revendication 1, dans lequel :

un intervalle entre des signaux de référence spécifiques à l'UE voisins sur une même sous-porteuse vaut N symboles OFDM, dans lequel N est égal à 4, 5, 6 ou 7 ;
un intervalle minimal entre des signaux de référence spécifiques à l'UE sur un même symbole OFDM ou sur des symboles OFDM différents vaut M sous-porteuses, dans lequel M = 3 ou 4.

3. Procédé selon la revendication 1, comprenant en outre : lors de la configuration des signaux de référence spécifiques à l'UE sur les symboles de service, la configuration d'un nombre de couches de multiplexage spatial des signaux de référence spécifiques à l'UE qui est le même nombre qu'un nombre de couches de canal pour transmettre les données de service dans le canal de service afin d'obtenir des signaux de référence spécifiques à l'UE en couches ; et l'utilisation des signaux de référence spécifiques à l'UE en couches pour démoduler les données de service et l'information de diffusion.

**4.** Procédé selon la revendication 2, comprenant en outre :
la configuration, par la station de base, de l'identifiant de canal pour le canal de diffusion, dans lequel l'identifiant de canal peut être utilisé par la station de base pour brouiller l'information de diffusion.

**5.** Procédé selon la revendication 4, dans lequel l'identifiant de canal est un identifiant temporaire de réseau radio.

**6.** Procédé de démodulation qui utilise un signal de référence pour la démodulation, dans un système à évolution de long terme, LTE, comprenant :

la démodulation (S201), par un équipement d'utilisateur, UE, d'une information de commande en utilisant des signaux de référence spécifiques à la cellule qui sont configurés sur des symboles de commande et la démodulation (S203) de données de service et d'une information de diffusion en utilisant des signaux de référence spécifiques à l'UE qui sont configurés sur des symboles de service ; et
l'utilisation, par l'UE, d'un identifiant de canal d'un canal de diffusion pour débrouiller une information de diffusion qui est portée sur les symboles de service afin de recevoir l'information de diffusion ; dans lequel :

les symboles de commande et les symboles de service sont des symboles de multiplexage par répartition orthogonale de la fréquence, OFDM ; et
**caractérisé en ce que** les signaux de référence spécifiques à la cellule et l'information de commande sont transmis dans toutes les ressources de symboles OFDM transmettant le canal de commande ; et les signaux de référence spécifiques à l'UE, l'information de diffusion et les données de service sont transmis dans toutes les ressources de symboles OFDM transmettant le canal de service.

**7.** Procédé de traitement d'un signal de référence pour une démodulation, dans un système à évolution de long terme, LTE, comprenant :

la configuration, par une station de base, de signaux de référence spécifiques à la cellule sur des symboles de commande et de signaux de référence spécifiques à l'équipement d'utilisateur, UE, sur des symboles de service ;
la constitution, par la station de base, d'un canal de commande pour transmettre l'information de commande qui est portée sur les symboles de commande ;
la constitution, par la station de base, d'un canal de diffusion pour transmettre une information de diffusion qui est portée sur les symboles de service et la constitution d'un canal de service pour transmettre des données de service qui sont portées sur les symboles de service, l'information de diffusion est brouillée avec un identifiant de canal du canal de diffusion ;
la démodulation, par un UE, de l'information de commande en utilisant les signaux de référence spécifiques à la cellule et la démodulation des données de service et de l'information de diffusion en utilisant les signaux de référence spécifiques à l'UE ; et
l'utilisation, par l'UE, de l'identifiant de canal du canal de diffusion pour débrouiller l'information de diffusion qui est portée sur les symboles de service afin de recevoir l'information de diffusion ; dans lequel :

les symboles de commande et les symboles de service sont des symboles de multiplexage par répartition orthogonale de la fréquence, OFDM ; et
**caractérisé en ce que** les signaux de référence spécifiques à la cellule et l'information de commande sont transmis dans toutes les ressources de symboles OFDM transmettant le canal de commande ; et les signaux de référence spécifiques à l'UE, l'information de diffusion et les données de service sont transmis dans toutes les ressources de symboles OFDM transmettant le canal de service.

**8.** Station de base dans un système à évolution de long terme, LTE, comprenant :

un premier module de configuration (100) pour configurer des signaux de référence spécifiques à la cellule sur des symboles de commande et pour constituer un canal de commande pour transmettre une information de commande qui est portée sur les symboles de commande ;
un second module de configuration (102) pour configurer des signaux de référence spécifiques à l'UE sur des symboles de service et pour constituer un canal de diffusion qui est porté sur les symboles de service et pour constituer un canal de service qui est porté sur les symboles de service, dans lequel le canal de diffusion est configuré pour transmettre une information de diffusion et le canal de service est configuré pour transmettre des données de service, l'information de diffusion est brouillée avec un identifiant de canal du canal de diffusion ; dans laquelle :

les symboles de commande et les symboles de service sont des symboles de multiplexage par répartition orthogonale de la fréquence, OFDM ; et

**caractérisée en ce que** les signaux de référence spécifiques à la cellule et l'information de commande sont transmis dans toutes les ressources de symboles OFDM transmettant le canal de commande ; et les signaux de référence spécifiques à l'UE, l'information de diffusion et les données de service sont transmis dans toutes les ressources de symboles OFDM transmettant le canal de service.

9. Station de base selon la revendication 8, dans laquelle :

un intervalle entre des signaux de référence spécifiques à l'UE voisins sur une même sous-porteuse vaut N symboles OFDM, dans lequel N est égal à 4, 5, 6 ou 7 ;
un intervalle minimal entre des signaux de référence spécifiques à l'UE sur un même symbole OFDM ou sur des symboles OFDM différents vaut M sous-porteuses, dans lequel M = 3 ou 4.

10. Équipement d'utilisateur, UE, dans un système à évolution de long terme, LTE, comprenant :

un premier module de traitement (110) pour démoduler une information de commande en utilisant des signaux de référence spécifiques à la cellule qui sont configurés sur des symboles de commande ;
un second module de traitement (112) pour démoduler des données de service et une information de diffusion en utilisant des signaux de référence spécifiques à l'UE qui sont configurés sur des symboles de service ; et pour utiliser un identifiant de canal d'un canal de diffusion pour débrouiller une information de diffusion qui est portée sur les symboles de service afin de recevoir l'information de diffusion ; dans lequel :

les symboles de commande et les symboles de service sont des symboles de multiplexage par répartition orthogonale de la fréquence, OFDM ; et
**caractérisé en ce que** les signaux de référence spécifiques à la cellule et l'information de commande sont transmis dans toutes les ressources de symboles OFDM transmettant le canal de commande ; et les signaux de référence spécifiques à l'UE, l'information de diffusion et les données de service sont transmis dans toutes les ressources de symboles OFDM transmettant le canal de service.

11. Système de traitement d'un signal de référence pour une démodulation, dans un système à évolution de long terme, LTE, comprenant une station de base et un équipement d'utilisateur, UE, dans lequel :
la station de base est configurée pour configurer des signaux de référence spécifiques à la cellule sur des symboles de commande et des signaux de référence spécifiques à l'UE sur des symboles de service, et la station de base comprend :

un premier module de configuration (100) pour configurer les signaux de référence spécifiques à la cellule sur les symboles de commande et pour constituer un canal de commande pour transmettre l'information de commande qui est portée sur les symboles de commande ;
un second module de configuration (102) pour configurer les signaux de référence spécifiques à l'UE sur les symboles de service et pour constituer un canal de diffusion qui est porté sur les symboles de service et pour constituer un canal de service qui est porté sur les symboles de service, dans lequel le canal de diffusion est configuré pour transmettre une information de diffusion et le canal de service est configuré pour transmettre des données de service, l'information de diffusion est brouillée avec un identifiant de canal du canal de diffusion ;
dans lequel :
l'UE est configuré pour démoduler l'information de commande en utilisant les signaux de référence spécifiques à la cellule et pour démoduler les données de service et l'information de diffusion en utilisant les signaux de référence spécifiques à l'UE, et l'UE comprend :

un premier module de traitement (110) pour démoduler l'information de commande en utilisant des signaux de référence spécifiques à la cellule qui sont configurés sur les symboles de commande ;
un second module de traitement (112) pour démoduler les données de service et l'information de diffusion en utilisant les signaux de référence spécifiques à l'UE qui sont configurés sur les symboles de service ; et pour utiliser l'identifiant de canal du canal de diffusion pour débrouiller l'information de diffusion qui est portée sur les symboles de service afin de recevoir l'information de diffusion ; dans lequel :

les symboles de commande et les symboles de service sont des symboles de multiplexage par répartition orthogonale de la fréquence, OFDM ; et

**caractérisé en ce que** les signaux de référence spécifiques à la cellule et l'information de commande sont transmis dans toutes les ressources de symboles OFDM transmettant le canal de commande ; et les signaux de référence spécifiques à l'UE, l'information de diffusion et les données de service sont transmis dans toutes les ressources de symboles OFDM transmettant le canal de service.

Fig. 1

| |
|---|
| The base station configures cell-specific reference signals on control symbols and makes a control channel for transmitting control information carried on the control symbols |

S101

| |
|---|
| The base station configures UE-specific reference signals on service symbols, and makes a broadcast channel and a service channel carried on the service symbols |

S103

Fig. 2

| |
|---|
| the UE demodulates the control information by using the cell-specific reference signals configured on the control symbols |

S201

| |
|---|
| the UE demodulates the service data and the broadcast data by using the UE-specific reference signals configured on the service symbols |

S203

Fig. 4a

Fig. 4b

## Fig. 5

72 sub-carriers

symbol 3

slot 1

symbol 0

$$k = \frac{N_{RB}^{DL} N_{sc}^{RB}}{2} - 36 + 72$$

$$k = \frac{N_{RB}^{DL} N_{sc}^{RB}}{2} - 36$$

## Fig. 6a

$l = 0$      $l = 13$

## Fig. 6b

$l = 0$        *l* 13

## Fig. 7a

$l = 0$        *l*=13

Fig. 7b

$l = 0$

$l=13$

Fig. 8a

$l = 0$

$l=13$

EP 2 469 906 B1

Fig. 8b

$l = 0$ ⋮ ⋮ *l*=13

Fig. 9a

$l = 0$ ⋮ ⋮ *l*=13

28

Fig. 9b

Fig. 9c

## Fig. 9d

$l = 0$             / 13

## Fig. 10

first configuration module  —100

second configuration module  —102

third configuration module  —104

## Fig. 11

first processing module  —110

second processing module  —112

descrambling module  —114

Fig. 12

base station (120)
- first configuration module (100)
- second configuration module (102)
- third configuration module (104)

user equipment (122)
- first processing module (110)
- second processing module (112)
- descrambling module (114)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008096626 A1

**Non-patent literature cited in the description**

- Common RS for DL high-order MIMO. 3GPP DRAFT; R1-090826 COMMON RS FOR DL HIGH-ORDER MIMO, 3GPP. MOBILE COMPETENCE CENTRE, 03 February 2009

- 3GPP DRAFT; RT-090050REVMARKS, 3GPP. MOBILE COMPETENCE CENTRE, 01 September 2009